# EUROPÄISCHE PATENTSCHRIFT

(11) **EP 1 984 657 B1**
(45) Veröffentlichungstag und Bekanntmachung des Hinweises auf die Patenterteilung: **23.06.2010**
(21) Anmeldenummer: 07726308.5
(22) Anmeldetag: 02.02.2007
(51) Int. Cl.: F16H 61/30

(54) **SCHALTEINRICHTUNG ZUR SCHALTUNG EINES KRAFTFAHRZEUG-GETRIEBES**
SHIFTING DEVICE FOR SHIFTING A MOTOR VEHICLE GEAR BOX
DISPOSITIF DE CHANGEMENT DE VITESSE POUR L'ACTIONNEMENT D'UNE BOÎTE DE VITESSES DE VÉHICULE AUTOMOBILE

(30) Priorität: 15.02.2006 DE 102006006868
(43) Veröffentlichungstag der Anmeldung: 29.10.2008
(73) Patentinhaber: ZF Friedrichshafen AG, 88038 Friedrichshafen (DE)
(72) Erfinder: KAUFFELDT, Rudolf, 88131 Bodolz (DE); MARTIN, Hans-Joachim, 88079 Kressbronn (DE); GUMPOLTSBERGER, Gerhard, 88045 Friedrichshafen (DE); EBENHOCH, Michael, 88069 Tettnang (DE); RIEGER, Wolfgang, 88048 Friedrichshafen (DE); DRABEK, Michael, 14776 Brandenburg (DE); CSAJAGI, Stefan, 88097 Eriskirch (DE)
(86) Internationale Anmeldenummer: PCT/EP2007/051032
(87) Internationale Veröffentlichungsnummer: WO 2007/093509

(56) Entgegenhaltungen:
- EP-A- 1 398 544
- EP-A1- 0 085 498
- EP-A1- 0 487 861
- WO-A-03/085290
- DE-A1- 2 223 881
- DE-A1- 2 510 392
- DE-A1- 3 213 757
- JP-A- 59 089 856

## Beschreibung

Die Erfindung betrifft eine Schalteinrichtung eines Kraftfahrzeug-Getriebes gemäß dem Oberbegriff des Patentanspruchs 1.

Zur Schaltung eines Getriebes ist in einem Fahrzeug eine Schalteinrichtung innerhalb des Getriebes vorgesehen, mit deren Hilfe die einzelnen Gangstufen ein- und ausgelegt werden können. Hierzu können Bauteile der Schalteinrichtung manuell vom Fahrzeugführer bewegt werden, oder aber es sind von einem Hilfsmedium, beispielsweise einer Hydraulikflüssigkeit, betätigbare Schaltelemente bzw. Aktuatoren vorgesehen, welche auf die zur Schaltung der Gangstufen notwendigen Bauteile der Schalteinrichtung einwirken.

Aus der EP 0 541 035 B1 ist eine Schalteinrichtung für mehrgängige Stufenwechselgetriebe bekannt, die Ventile und Schaltzylinder aufweist, in denen sich von einem Steuerungsfluid betätigte Kolben befinden. An den Schaltzylindern sind Schaltstangen angeschlossen, die über Schaltelemente auf Bauteile des Getriebes zur Bildung einer drehmomentübertragenden Verbindung einwirken. Eine Schaltstange betätigt dabei die einer Schaltgruppe zugehörigen Bauteile.

Nachteilig daran ist, dass die Schaltstangen eine hohe Masse aufweisen, die zur Gesamtmasse des Getriebes nachteilig beiträgt, und die bei jedem Schaltvorgang von der Schalteinrichtung beschleunigt und abgebremst werden muss.

Aus der DE 197 56 639 A1 ist ein Schaltelement bekannt, bei welchem Schaltzylinder, in welchen von einem Fluid bewegte Kolben vorgesehen sind, mit Schaltelementen, nämlich Schaltgabeln, einstückig verbunden sind. Der mit einer Schaltgabel verbundene Kolben lässt sich entlang einer Führungsschiene, mit welcher das zweiteilige Zylindergehäuse starr verbunden ist, in zwei Richtungen axial bewegen, wodurch auch das Schaltelement bewegt wird.

Vorteilhaft an dieser aus der DE 197 56 639 A1 bekannten Schalteinrichtung ist, dass durch die Anordnung in einer kompakten Einheit Verbindungselemente zwischen den aus Schaltgabeln oder Schaltschwingen gebildeten Schaltelementen und den Schaltzylindern bzw. Schaltkolben entfallen können, wodurch die Reaktionszeiten zwischen dem eine Schaltung auslösenden Befehl und der Bewegung der Schaltelemente durch den Wegfall der zu bewegenden massigen Schaltstangen deutlich verkürzt werden kann.

Nachteilig an einer derartigen Schalteinrichtung ist jedoch die einteilige Ausgestaltung von Schaltkolben und Schaltelement, welches insbesondere eine Wartung und einen Austausch der Schalteinrichtung erschwert. Ebenso ist eine Integration oder Anpassung einer derartigen Anordnung in ein bereits vorhandenes Getriebe kaum möglich. Nachteilig bei einer derartigen Anordnung kann bei bestimmten Getriebearten sein, dass sich der Kolben nur axial entlang der Führungsschiene bewegen lässt. Ein unter Umständen wünschenswertes Verschwenken oder Kippen eines Schaltelementes ist mit einer derartigen Ausgestaltung nicht möglich.

Ein weiteres Problem bei bislang bekannt gewordenen Lösungen ist darin zu sehen, dass die Schaltzeiten relativ lang sind, welches auf lange hydraulische Kanalanbindungen an den Schaltelementen zurückzuführen ist. Zudem müssen solche Kanäle nicht selten mehrfach durch Engstellen und starke Kanalabwinklungen hindurch geführt werden, was zu vergleichsweise hohen Leitungswiderständen und langen Schaltzeiten führt.

In dem gattungsbildenden Dokument JP-A-59089856 und in dem Dokument EP-A-0487861 ist jeweils eine Schalteinrichtung eines Kraftfahrzeug-Getriebes gezeigt, die einen doppelseitig ansteuerbaren hydraulischen Schaltzylinder aufweist. Darin ist ein von einem Fluid bewegbarer Kolben angeordnet, wobei der Kolben eine Kolbenstange aufweist, welcher der Bewegung des Kolbens folgt.

Vor diesem Hintergrund liegt der Erfindung die Aufgabe zugrunde, eine Schalteinrichtung der eingangs geschilderten Art zu schaffen, welche kurze Schaltzeiten ermöglicht, kompakt aufgebaut und reparatur- sowie wartungsfreundlich ausgebildet ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich die gestellte Aufgabe mit einem einfach aufgebauten 2-Wege-Schaltzylinder lösen lässt, welcher lösbar mit dem Schaltelement verbunden ist, welches als Schaltschwinge ausgebildet ist.

Demnach geht die Erfindung aus von einer Schalteinrichtung zur Schaltung eines Kraftfahrzeug-Getriebes mit einer Schaltwelle, auf der eine Vielzahl von Schaltelementen, insbesondere Schaltschwingen, zur Durchführung eines Schaltvorganges beweglich angeordnet sind, wobei die Schalteinrichtung wenigstens einen doppelseitig ansteuerbaren hydraulischen Schaltzylinder mit einem von einem Fluid in einem Zylindergehäuse bewegbaren Kolben umfasst, welcher in Wirkverbindung mit einem zu betätigenden Schaltelement steht. Zur Lösung der gestellten Aufgabe sieht die Erfindung außerdem vor, dass der Kolben eine der Bewegung des Kolbens folgende Kolbenstange aufweist, welche direkt und für Montagezwecke lösbar mit dem als Schaltschwinge ausgebildeten Schaltelement verbindbar ist.

Durch diese Bauform ist eine Schalteinrichtung geschaffen, die einfach aufgebaut ist, kompakte Außenmaße aufweist und welche sich zudem einfach montieren sowie warten lässt. So ins bei der Montage der Schalteinrichtung lediglich notwendig, die Schaltschwinge in den Schaltzylinder einzuhängen und bei der Demontage entsprechend wieder auszuhängen. Da der Zylinder bzw. der Zylinderkolben direkt mit der Schaltschwinge verbunden ist, sind die Schaltwege äußerst kurz, welches zu geringen bewegten Massen führt und zusammen mit sehr kurzen Kanallängen für das Fluid sehr kurze Schaltzeiten bewirkt.

In praktischen Weiterbildungen der Erfindung kann vorgesehen sein, dass der Schaltzylinder als horizontal wirkender doppelseitig ansteuerbarer Schaltzylinder ausgebildet ist, wobei zudem vorgesehen sein kann, dass der Schaltzylinder einen Doppelkolben aufweist, dessen Kolbenböden vom Fluid mit einem Druck beaufschlagbar sind, und dessen zwei Kolben durch eine Kolbenstange verbunden sind, welche mit dem Schaltelement verbunden ist.

In einer dazu alternativen Weiterbildung der Erfindung kann vorgesehen sein, dass der Schaltzylinder als horizontal wirkender und doppelseitig ansteuerbarer gestufter Schaltzylinder ausgebildet ist. Ferner kann dabei vorgesehen sein, dass der Schaltzylinder einen Kolben aufweist, dessen Stirnflächen vom Fluid mit einem Druck beaufschlagbar sind und dessen außerhalb des Zylindergehäuses angeordnetes Kolbenstangenende mit dem Schaltelement verbunden ist.

Ebenso ist es alternativ auch denkbar, dass der Schaltzylinder als vertikal wirkender und doppelseitig ansteuerbarer Schaltzylinder ausgebildet ist, wobei sich diese Ausgestaltung dadurch weiterbilden lässt, dass der Schaltzylinder einen Kolben aufweist, dessen Stirnflächen vom Fluid mit einem Druck beaufschlagbar sind, und dessen außerhalb des Zylindergehäuses angeordnetes Kolbenstangenende mit dem Schaltelement verbunden ist.

Außerdem ist es gemäß einer weiteren alternativen Ausgestaltung möglich, dass der Schaltzylinder als vertikal wirkender und doppelseitig ansteuerbarer gestufter Schaltzylinder ausgebildet ist, wobei des Weiteren vorgesehen sein kann, dass der Schaltzylinder einen Kolben aufweist, dessen Stirnflächen vom Fluid mit einem Druck beaufschlagbar sind, und dessen außerhalb des Zylindergehäuses angeordnetes Kolbenstangenende mit dem Schaltelement verbunden ist.

Es ist vorgesehen, dass eine Bewegung der Kolbenstange eine Kippbewegung des Schaltelements bewirkt.

In besonders brauchbaren Weiterbildungen der Erfindung kann vorgesehen sein, dass der Schaltzylinder in eine Kanalplatte des Getriebes integriert ist, oder, alternativ dazu, dass der Schaltzylinder mit seinem Zylindergehäuse mit einem hydraulischen Schaltgerät des Getriebes verbunden, insbesondere an diesem angeschraubt ist.

Ebenso ist es aber auch möglich, dass der Schaltzylinder mit seinem Zylindergehäuse mit einem Getriebegehäuse des Getriebes verbunden, bevorzugt an diesem angeschraubt ist.

Zur Verdeutlichung der Erfindung ist der Beschreibung eine Zeichnung mit Ausführungsbeispielen beigefügt. In dieser zeigt
- Fig. 1: ein erstes Ausführungsbeispiel einer erfindungsgemäß ausgebil- deten Schalteinrichtung schematisch in einer Seitenansicht,
- Fig. 2: ein Detail aus Fig. 1 im Längsschnitt,
- Fig. 3: ein zweites Ausführungsbeispiel einer erfindungsgemäßen Schalteinrichtung in Längsschnitt, und
- Fig. 4: ein drittes Ausführungsbeispiel einer erfindungsgemäßen Schalt- einrichtung in Längsschnitt.

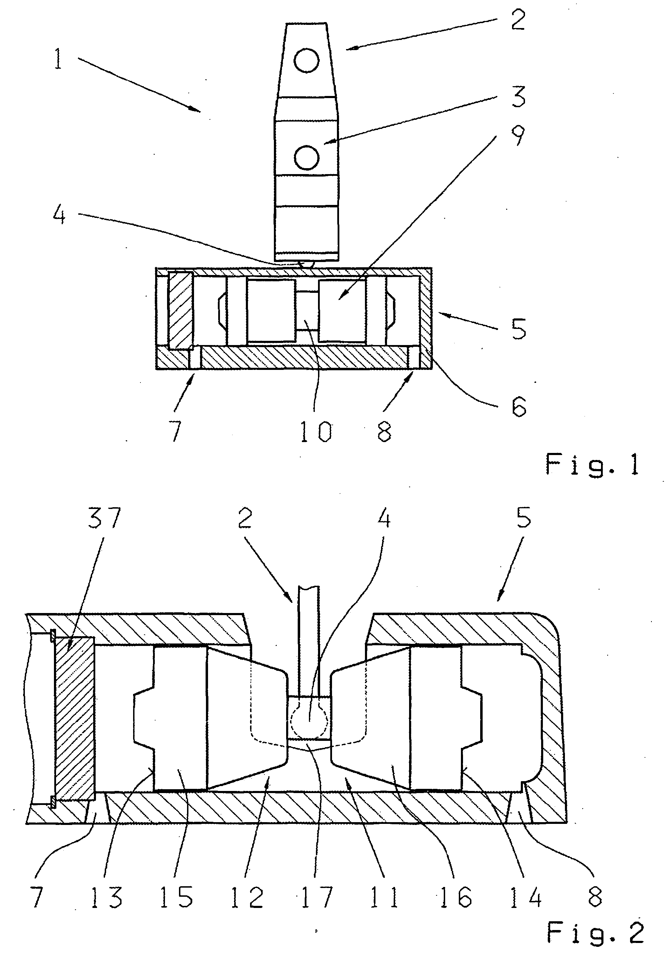

Demnach zeigt Fig. 1 schematisch eine Schalteinrichtung 1 zur Schaltung eines nicht näher dargestellten Kraftfahrzeug-Getriebes mit einer ebenfalls nicht dargestellten Schaltwelle, auf der eine Vielzahl von Schaltelementen 2 angeordnet ist, von denen in Figur 1 ein Schaltelement 2 in Form einer Schaltschwinge 3 zur Durchführung eines Schaltvorganges gezeigt ist.

Ein freies Ende 4 der Schaltschwinge 3 ist lösbar mit einem Schaltzylinder 5 verbunden. Dieser Schaltzylinder 5 weist ein Zylindergehäuse 6 mit zwei Druckleitungen 7 und 8 auf, durch welche ein Fluid bzw. eine Hydraulikflüssigkeit in das Zylindergehäuse 6 eingespeist werden kann. Je nach dem, in welche der beiden Druckleitungen 7, 8 die Hydraulikflüssigkeit in das Zylindergehäuse 6 einströmt, wird ein Kolben 9 nach links oder rechts bewegt. Der Kolben 9 weist eine Kolbenstange 10 auf, welche etwa mittig mit dem freien Ende 4 des als Schaltschwinge 3 ausgebildeten Schaltelements 2 verbunden ist.

Der Schaltzylinder 5 des ersten Ausführungsbeispiels gemäß den Figuren 1 und 2 ist als horizontal wirkender und doppelseitig ansteuerbarer Schaltzylinder 11 ausgebildet, welcher, was insbesondere Fig. 2 zu erkennen ist, einen Doppelkolben 12 aufweist, dessen Kolbenböden 13, 14 vom durch die Druckleitungen 7, 8 in das Zylindergehäuse 6 eingespeiste Fluid beaufschlagbar sind. Der Doppelkolben 12 weist dabei zwei Kolben 15 und 16 auf, welche durch eine Kolbenstange 17 miteinander verbunden sind. Die Kolbenstange 17 ist zudem lösbar mit dem freien Ende 4 des Schaltelements 2 verbunden.

Strömt Fluid in die Leitung 7 ein und beaufschlagt den Kolbenboden 13 des Kolbens 15 mit Druck, wird der Doppelkolben 12 nach rechts bewegt, wodurch auch das freie Ende 4 des Schaltelementes 2 nach rechts bewegt wird. Je nach Aufhängung des Schaltelementes 2 führt dieses dabei eine Lateralbewegung oder eine Kippbewegung durch und bewirkt durch ein bekanntes Einwirken auf Koppelglieder einen entsprechenden Schaltvorgang eines gewählten Ganges des Getriebes.

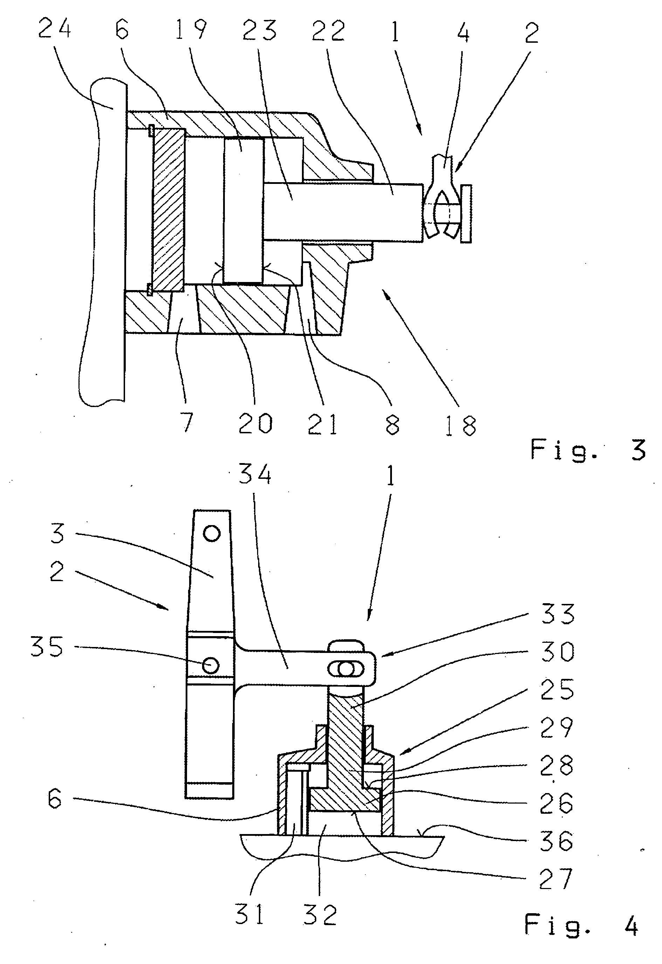

In Fig. 3 ist ein zweites Ausführungsbeispiel einer erfindungsgemäßen Schalteinrichtung 1 in Längsschnitt dargestellt. Diese Schalteinrichtung 1 entspricht prinzipiell der in Fig. 1 dargestellten Schalteinrichtung 1, jedoch ist der Schaltzylinder 5 als horizontal wirkender und doppelseitig ansteuerbarer gestufter Schaltzylinder 18 ausgebildet. Im Gegensatz zum Schaltzylinder 11 aus Fig. 1 und 2 weist der Schaltzylinder 18 lediglich einen Kolben 19 auf, dessen Stirnflächen 20, 21 vom Fluid beaufschlagbar sind und dessen außerhalb des Zylindergehäuses 6 angeordnetes Kolbenstangenende 22 einer Kolbenstange 23 mit dem freien Ende 4 des Schaltelements 2 verbunden ist.

Das Zylindergehäuse 6 des Schaltzylinders 18 ist zudem mit einer Getriebegehäusewandung 24 oder dem Gehäuse einer hydraulischen Schaltvorrichtung verbunden.

In Fig. 4 ist ein drittes Ausführungsbeispiel eines erfindungsgemäßen Schaltelements 1 dargestellt, bei welchem der Schaltzylinder 5 als vertikal wirkender und doppelseitig ansteuerbarer gestufter Schaltzylinder 25 ausgebildet ist, welcher weitgehend dem in Fig. 2 gezeigte Schaltzylinder 18 entsprechen. Dementsprechend weist der Schaltzylinder 25 einen Kolben 26 mit zwei Stirnseiten 27 und 28 sowie einer Kolbenstange 29 auf, deren außerhalb des Zylindergehäuses 6 angeordnetes Kolbenstangenende 30 mit dem freien Ende 4 des Schaltelements 2 verbunden ist. Im Gegensatz zu dem in Fig. 2 dargestellten Ausführungsbeispiel weist der Schaltzylinder 25 vertikale Druckleitungen 31 und 32 auf, durch welche Fluid in den Schaltzylinder 25 fließen und die Stirnseiten 27 sowie 28 mit Druck beaufschlagen kann. Die Ausrichtung des Zylindergehäuses 6, der Kolbenstange 29 und des Kolbenstangenendes 30 ist ebenfalls vertikal.

Das in Fig. 4 dargestellte Schaltelement 2 in Form einer Schaltschwinge 4 weist ein freies Ende 33 in Form eines rechtwinklig von der Schaltschwinge 4 abstehenden Steges 34 auf, welcher mit dem Kolbenstangenende 30 verbunden ist. Hebt sich das Kolbenstangenende 30 durch in die Druckleitung 32 einströmendes Fluid, wird ein Kippen oder Verschwenken der Schaltschwinge 4 um eine Schwenkachse 35 bewirkt, welches ein Schalten des entsprechenden Getriebeelements zur Folge hat.

Das Zylindergehäuse 6 des Schaltzylinders 25 ist mit einem nur angedeuteten Schaltgerät 36 verschraubt. Es kann aber auch vorgesehen sein, dass der Schaltzylinder 25 in eine in Figur 2 angedeutete Kanalplatte 37 integriert ist. Entsprechend ist es bei allen gezeigten Ausführungsformen möglich, dass Schaltelement entweder mit der Getriebegehäusewandung 24, mit der Kanalplatte 37 oder dem Steuergerät 36 zu verbinden bzw. in diese zu integrieren.

Die in Fig. 4 dargestellte Ausführungsform eines vertikal wirkenden Schaltzylinders 25 lässt sich auch dadurch abwandeln, dass ein vertikal wirkender Schaltzylinder in Form eines Doppelkolbenzylinders ähnlich der in den Figuren 1 und 2 dargestellten Form verwendet wird, wobei die Druckleitungen an die Doppelkolbenausgestaltung angepasst wären. Der vertikal wirkende Doppelkolbenschaltzylinder wäre entsprechend höher angeordnet, welches je nach innerer Getriebetopographie vorteilhaft sein kann.

### Bezugszeichen

- 1: Schalteinrichtung
- 2: Schaltelement
- 3: Schaltschwinge
- 4: Ende
- 5: Schaltzylinder
- 6: Zylindergehäuse
- 7: Druckleitung
- 8: Druckleitung
- 9: Kolben
- 10: Kolbenstange
- 11: Schaltzylinder
- 12: Doppelkolben
- 13: Kolbenboden
- 14: Kolbenboden
- 15: Kolben
- 16: Kolben
- 17: Kolbenstange
- 18: Schaltzylinder
- 19: Kolben
- 20: Stirnfläche
- 21: Stirnfläche
- 22: Kolbenstangenende
- 23: Kolbenstange
- 24: Getriebegehäusewandung
- 25: Schaltzylinder
- 26: Kolben
- 27: Stirnseite
- 28: Stirnseite
- 29: Kolbenstange
- 30: Kolbenstangenende
- 31: Druckleitung
- 32: Druckleitung
- 33: Ende
- 34: Steg
- 35: Schwenkachse
- 36: Schaltgerät
- 37: Kanalplatte

## Patentansprüche

1. Schalteinrichtung (1) eines Kraftfahrzeug-Getriebes, welche wenigstens einen doppelseitig ansteuerbaren hydraulischen Schaltzylinder (5, 11, 18, 25) mit einem von einem Fluid in einem Zylindergehäuse (6) bewegbaren Kolben (9, 15, 16, 19, 26) und ein mit dem Kolben in Wirkverbindung stehendes, zu betätigendes Schaltelement (2) umfasst, wobei der Kolben (9, 15, 16, 19, 26) eine der Bewegung des Kolbens (9, 15, 16, 19, 28) folgende Kolbenstange (10,17, 23, 29) aufweist, **dadurch gekennzeichnet, dass** die Kolbenstange direkt und für Montagezwecke lösbar mit dem Schaltelement (2) verbunden ist, wobei das Schaltelement als schwenkbare Schaltschwinge ausgebildet ist.

2. Schalteinrichtung nach Anspruch 1, **dadurch gekennzeichnet, dass** der Schaltzylinder (25) als vertikal wirkender und doppelseitig ansteuerbarer Schaltzylinder ausgebildet ist.

3. Schalteinrichtung nach Anspruch 2, **dadurch gekennzeichnet , dass** der Schakzylinder (5) einen Kolben aufweist, dessen Stirnflächen vom Fluid beaufschlagbar sind, und dessen außerhalb des Zylindergehäuses (6) angeordnetes Kolbenstangenende mit dem Schaltelement (2) verbunden ist

4. Schalteinrichtung nach Anspruch 2, **dadurch gekennzeichnet , dass** der Schaltzylinder als vertikal wirkender und doppelseitig ansteuerbarer gestufter Schaltzylinder (25) ausgebildet ist.

5. Schalteinrichtung nach Anspruch 4, **dadurch gekennzeichnet , dass** der Schaltzylinder (25) einen Kolben (26) aufweist, dessen Stirnflächen (27, 28) vom Fluid beaufschlagbar sind, und dessen außerhalb des Zylindergehäuses (6) angeordnetes Kolbenstangenende (30) einer Kolbenstange (29) mit dem Schaltelement (2) verbunden ist.

6. Schalteinrichtung nach wenigstens einem der Ansprüche 1 bis 5, **dadurch gekennzeichnet , dass** eine Bewegung der Kolbenstange (29) des Schaltzylinders (25) eine Kippbewegung des Schaltelements (2) bewirkt.

7. Schalteinrichtung nach wenigstens einem der Ansprüche 1 bis 6, **dadurch gekennzeichnet, dass** der Schaltzylinder (25) in eine Kanalplatte (37) des Getriebes integriert ist.

8. Schalteinrichtung nach wenigstens einem der Ansprüche 1 bis 6, **dadurch gekennzeichnet , dass** der Schaltzylinder (5, 11, 18, 25) mit seinem Zylindergehäuse (6) mit einem Schaltgerät (36) des Getriebes verbunden, insbesondere an diesem angeschraubt ist.

## Claims

1. Shift device (1) of a motor vehicle gearbox, which shift device comprises at least one double-sidedly actuable hydraulic shift cylinder (5, 11, 18, 25) with a piston (9, 15, 16, 19, 26) which can be moved by a fluid in a cylinder housing (6) and comprises a shift element (2) which is operatively connected to the piston and which is to be actuated, with the piston (9, 15, 16, 19, 26) having a piston rod (10, 17, 23, 29) which follows the movement of the piston (9, 15, 16, 19, 26), **characterized in that** the piston rod is connected directly, and for assembly purposes releasably, to the shift element (2), with the shift element being designed as a pivotable shift rocker.

2. Shift device according to Claim 1, **characterized in that** the shift cylinder (25) is designed as a vertically acting and double-sidedly actuable shift cylinder.

3. Shift device according to Claim 2, **characterized in that** the shift cylinder (5) has a piston whose end surfaces can be acted on by the fluid and whose piston rod end arranged outside the cylinder housing (6) is connected to the shift element (2).

4. Shift device according to Claim 2, **characterized in that** the shift cylinder is designed as a vertically acting and double-sidedly actuable stepped shift cylinder (25).

5. Shift device according to Claim 4, **characterized in that** the shift cylinder (25) has a piston (26) whose end surfaces (27, 28) can be acted on by the fluid and whose piston rod end (30), which is arranged outside the cylinder housing (6), of a piston rod (29) is connected to the shift element (2).

6. Shift device according to at least one of Claims 1 to 5, **characterized in that** a movement of the piston rod (29) of the shift cylinder (25) causes a tilting movement of the shift element (2).

7. Shift device according to at least one of Claims 1 to 6, **characterized in that** the shift cylinder (25) is integrated into a duct plate (37) of the gearbox.

8. Shift device according to at least one of Claims 1 to 6, **characterized in that** the shift cylinder (5, 11, 18, 25) is connected, in particular screwed, by means of its cylinder housing (6) to a shift unit (36) of the gearbox.

## Revendications

1. Dispositif de changement de vitesse (1) d'une boîte de vitesses de véhicule automobile, qui comprend au moins un cylindre de changement de vitesse hydraulique (5, 11, 18, 25) à commande bilatérale, avec un piston (9, 15, 16, 19, 26) déplaçable par un fluide dans un carter de cylindre (6), et un élément de changement de vitesse (2) à commander, en liaison fonctionnelle avec le piston, le piston (9, 15, 16, 19, 26) présentant une tige de piston (10, 17, 23, 29) suivant le mouvement du piston (9, 15, 16, 19, 26), **caractérisé en ce que** la tige de piston est connectée à l'élément de changement de vitesse (2) directement et de manière desserrable pour des besoins de montage, l'élément de changement de vitesse étant réalisé sous forme de fourchette de changement de vitesse pivotante.

2. Dispositif de changement de vitesse selon la revendication 1, **caractérisé en ce que** le cylindre de changement de vitesse (25) est réalisé sous forme de cylindre de changement de vitesse agissant verticalement et à commande bilatérale.

3. Dispositif de changement de vitesse selon la revendication 2, **caractérisé en ce que** le cylindre de changement de vitesse (5) présente un piston dont les faces frontales peuvent être sollicitées par du fluide, et dont l'extrémité de tige de piston disposée en dehors du carter de cylindre (6) est connectée à l'élément de changement de vitesse (2).

4. Dispositif de changement de vitesse selon la revendication 2, **caractérisé en ce que** le cylindre de changement de vitesse est réalisé sous forme de cylindre de changement de vitesse étagé (25) agissant verticalement et à commande bilatérale.

5. Dispositif de changement de vitesse selon la revendication 4, **caractérisé en ce que** le cylindre de changement de vitesse (25) présente un piston (26) dont les faces frontales (27, 28) peuvent être sollicitées par un fluide, et dont l'extrémité de tige de piston (30) d'une tige de piston (29) disposée en dehors du carter de cylindre (6) est connectée à l'élément de changement de vitesse (2).

6. Dispositif de changement de vitesse selon au moins l'une quelconque des revendications 1 à 5, **caractérisé en ce qu'**un déplacement de la tige de piston (29) du cylindre de changement de vitesse (25) provoque un mouvement de basculement de l'élément de changement de vitesse (2).

7. Dispositif de changement de vitesse selon au moins l'une quelconque des revendications 1 à 6, **caractérisé en ce que** le cylindre de changement de vitesse (25) est intégré dans une plaque à canaux (37) de la boîte de vitesses.

8. Dispositif de changement de vitesse selon l'une quelconque des revendications 1 à 6, **caractérisé en ce que** le cylindre de changement de vitesse (5, 11, 18, 25) est connecté à son carter de cylindre (6) par un appareil de changement de vitesse (36) de la boîte de vitesses, notamment est vissé sur celui-ci.
